# EUROPEAN PATENT SPECIFICATION

(11) **EP 3 268 206 B1**
(45) Date of publication and mention of the grant of the patent: **25.11.2020**
(21) Application number: 15744645.1
(22) Date of filing: 09.03.2015
(51) Int. Cl.: B29C 49/48, B29C 49/42, B29C 49/72, B29C 65/00, B29C 65/02, B29L 31/00, B29C 49/04

(54) **METHODS, ASSEMBLIES,SYSTEMS, AND INTERMEDIATE STAGE PRE-ASSEMBLY MULTI-CHAMBER CONTAINERS TO MAKE A MULTI-CHAMBER CONTAINER**
VERFAHREN, ANORDNUNGEN, SYSTEME UND MEHRKAMMERBEHÄLTER MIT VORMONTAGEZWISCHENSTUFE ZUR HERSTELLUNG EINES MEHRKAMMERBEHÄLTERS
PROCÉDÉS, ENSEMBLES, SYSTÈMES ET PRÉ-ENSEMBLES DE STADE INTERMÉDIAIRE DE RÉCIPIENTS À CHAMBRES MULTIPLES POUR FABRIQUER UN RÉCIPIENT À CHAMBRES MULTIPLES

(43) Date of publication of application: 17.01.2018
(73) Proprietor: Graham Packaging Company, L.P., Lancaster, PA 17601 (US)
(72) Inventor: RAPET, Gilles, F-38390 Vertrieu (FR); ARCHENY, Armel, F-01470 Briord (FR); ANTIER, Grégory, F-01600 Trevoux (FR)
(74) Representative: Barker Brettell LLP
(86) International application number: PCT/IB2015/000505
(87) International publication number: WO 2016/142730

(56) References cited:
- DE-A1-102009 022 374
- US-A- 4 572 851
- US-A- 4 871 507
- US-A1- 2013 193 027
- US-B2- 8 506 875

## Description

### BACKGROUND

### Field of the Disclosed Subject Matter

The present disclosed subject matter relates to methods, assemblies, systems, and intermediate stage pre-assembly multi-chamber containers to make multi-chamber containers, as well as multi-chamber plastic containers made from the same, for example, a dual-chamber plastic container. Related prior art is described in the following documents: US2013/193027A1, DE10 2009 022374A1, US4572851A and US8506875B2.

### Description of Related Art

Multi-chamber container containers are used for a variety of products, such as cleaning products, including, but not limited to, toilet bowl cleaners, drain cleaners, and the like. However, such multi-chamber containers can be expensive and difficult to manufacture using conventional blow molding techniques and systems. For example, conventional molding techniques generally include mold blocks of a mold assembly that are cooled to thereby cool the temperature of an object blow therein. For example, the blow molded object can be a single chamber container.

To form a multi-chamber blow molded container, a separate attachment technique is therefore required. For example, multiple blow molded containers that are individually formed and cooled can be attached using an adhesive or welding technique. However, such techniques can introduce difficulties, which can be due to deformation, uneven cooling, leakage, or other similar problems.

There remains a need for more efficient techniques to make multi-chamber containers.

### SUMMARY

The purpose and advantages of the disclosed subject matter will be set forth in and apparent from the description that follows, as well as will be learned by practice of the disclosed subject matter. Additional advantages of the disclosed subject matter will be realized and attained by the methods and systems particularly pointed out in the written description and claims hereof, as well as from the appended drawings.

To achieve these and other advantages and in accordance with the purpose of the disclosed subject matter, as embodied and broadly described, a method to manufacture a container is provided. The method includes disposing a first parison within a first mold assembly having a first inner surface defining a first mold chamber. The first mold assembly includes at least one first insert disposed on the first inner surface within the first mold chamber. The first parison can be blow molded to form a first container body within the first mold chamber, wherein at least one first portion of the first container body corresponding to the at least one first insert has a first portion temperature greater than a remaining portion of the first container body. The at least one first portion of the first container body can be contacted to at least one second portion of a second container body to attach the first container body to the second container body.

As embodied herein, the first mold assembly can include a first set of mold blocks having an open configuration and a closed configuration, the first set of mold blocks forming the mold chamber when in the closed configuration. The first set of mold blocks can be opened before disposing the first parison therein. The first set of mold blocks can be closed with the first parison disposed therein to capture the first parison. The first set of mold blocks can be opened after blow molding the first parison to allow the first container body to be removed from the first mold assembly.

For purpose of illustration and not limitation, the first set of mold blocks can have a cooling system to cool the remaining portion of the first container body to a temperature less than the first portion temperature. Additionally, the first portion temperature can be at least a melting temperature of the parison, which can be about 130-140 °C. For example and not limitation, the first portion temperature can remain greater than the remaining portion of the first container body for about 30 seconds.

For example and not limitation, the at least one first insert can have a surface area less than about 5% of the first inner surface. Additionally, the at least one first insert can include a thermally insulating material. For example, the thermally insulating material comprises polytetrafluoroethylene (PTFE).

For purpose of illustration and not limitation, the first mold assembly further can include at least one first further insert having a first heat pin. At least one first further portion of the first container body can correspond to the at least one first further insert and can have a first further portion temperature different than the first portion temperature and greater than the remaining portion of the first blow-molded container body. The first heat pin can be configured to control the first further portion temperature. For example and not limitation, the first mold assembly can include a plurality of the first inserts, each first insert comprising a thermally insulating material, and the first mold assembly further can include at least one first further insert having a first heat pin.

As embodied herein, the first inner surface further can include a surface feature forming region corresponding to at least one surface feature of the first container body, the at least one surface feature configured to facilitate alignment of the first container body with the second container body. For example and not limitation, the at least one surface feature can include at least one of a protrusion, a depression, a ridge, or a plurality of ribs.

For purpose of illustration and not limitation, the first mold assembly further can include at least one first flash pocket adjacent to the first mold chamber. The first container body can include at least one first flash portion corresponding to the at least one first flash pocket. The at least one first flash portion can be trimmed from the first container body.

As embodied herein, contacting the at least one first portion of the first container body to at least one second portion of a second container body can include disposing the first container body and the second container body in a contacting station, wherein the at least one first portion of the first container body is proximate to the at least one second portion of the second container body. Positive internal pressure can be applied within the contacting station to increase a contact force between the at least one first portion and the at least one second portion.

For purpose of illustration and not limitation, a second parison can be disposed within a second mold assembly having a second inner surface defining a second mold chamber, the second mold chamber including at least one second insert disposed on the second inner surface. The second parison can be blow molded to form a second container body. The at least one second portion of the second container body can correspond to the at least one second insert has a second portion temperature greater than a remaining portion of the second container body. The at least one second portion of the second container body can be contacted to the at least one first portion of the first container body to attach the second container body to the first container body.

As embodied herein, the first portion temperature can be at least a melting temperature of the parison, which, for example and without limitation can be about 130-140 °C, and the second portion temperature can be at least the melting temperature of the parison, which, for example and without limitation, can be about 130-140 °C. Additionally, the first portion temperature can remain greater than the remaining portion of the first container body for about 20 seconds, and further wherein the second portion temperature remains greater than the remaining portion of the second container body for about 20 seconds.

As embodied herein, the at least one first insert can have a surface area less than about 5% of the first inner surface. Additionally, the at least one second insert can have a surface area less than about 5% of the second inner surface.

In accordance with another aspect of the disclosed subject matter, a mold assembly is provided. The mold assembly includes a set of mold blocks having an open configuration and a closed configuration. The set of mold blocks have an inner surface forming a mold chamber when in the closed configuration. At least one of the mold blocks includes at least one insert disposed on the inner surface. The at least one insert is configured to maintain at least one first portion of a first container body formed by blow molding a parison captured within the mold chamber at a first portion temperature greater than a remaining portion of the first container body to allow the first container body to be attached to a second container body by contacting the at least one first portion to at least one second portion of the second container body.

In accordance with another aspect of the disclosed subject matter, a system to make a container is provided. The system includes a first mold assembly with a first set of mold blocks having an open configuration and a closed configuration. The first set of mold blocks has a first inner surface forming a first mold chamber when in the closed configuration. At least one of the first mold blocks includes at least one first insert disposed on the first inner surface to maintain at least one first portion of a first container body formed by blow molding a first parison captured within the first mold chamber at a first portion temperature greater than a remaining portion of the first container body. At least one pressurized fluid source can be in fluid communication with the first mold chamber to blow mold the first parison into the first container body by introducing pressurized fluid to the first mold chamber. The system further includes a contacting station to contact the at least one first portion of the first container body to at least one second portion of a second container body.

As embodied herein, the contacting station can be configured to capture the first container body and the second container body to align the at least one first portion of the first container body proximate to the at least one second portion of the second container body. Additionally, the contacting station can be configured to apply positive internal pressure to increase a contact force between the at least one first portion and the at least one second portion.

For example and not limitation, a second mold assembly comprising a second set of mold blocks can have an open configuration and a closed configuration. The second set of mold blocks can have a second inner surface forming a second mold chamber when in the closed configuration. At least one of the second mold blocks can include at least one second insert disposed on the second inner surface. The at least one second insert can maintain at least one second portion of a second container body formed by blow molding a second parison captured within the second mold chamber at a second portion temperature greater than a remaining portion of the second container body. The at least one pressurized fluid source can be in fluid communication with the second mold chamber to blow mold the second parison into the second container body by introducing pressurized fluid to the second mold chamber.

For purpose of illustration and not limitation, the first mold assembly further can include at least one first flash pocket adjacent to the first mold chamber corresponding to at least one first flash portion of the first container body. The second mold assembly further can include at least one second flash pocket adjacent to the second mold chamber corresponding to at least one second flash portion of the second container body. A trimming station can trim the at least one first flash portion from the first container body and the at least one second flash portion from the second container body.

In accordance with another aspect of the disclosed subject matter, an intermediate stage pre-assembly multi-chamber container to make a multi-chamber container is provided. The intermediate stage pre-assembly multi-chamber container includes a first blow-molded container body including a first base and a first sidewall, the first blow-molded container body having a first opening defined therein, the first sidewall having at least one first portion. A second blow-molded container body includes a second base and a second sidewall, the second blow-molded container body having a second opening defined therein, the second sidewall having at least one second portion. The at least one first portion has a first portion temperature greater than a remaining portion of the first blow-molded container body to allow the first blow-molded container body to be attached to the second blow-molded container body by contacting the at least one first portion to the at least one second portion of the second blow-molded container body.

As embodied herein, a plurality of the first portions can be included. Additionally, For example and not limitation, the first blow-molded container body further can include a first further portion having a first further portion temperature. The first further portion temperature can be different than the first portion temperature and greater than the remaining portion of the first blow-molded container body.

For purpose of illustration and not limitation, the first blow-molded container body further can include at least one first surface feature to facilitate alignment of the first blow-molded container body with the second blow-molded container body. For example, the at least one first surface feature can include at least one of a first protrusion, a first depression, a first ridge, or a first plurality of ribs. Additionally, as embodied herein, the second container body can have at least one second surface feature to receive the at least one first surface feature of the first container body.

For example and not limitation, the at least one second portion can have a second portion temperature greater than a remaining portion of the second blow-molded container body.

For purpose of illustration and not limitation, the first blow-molded container body further can include at least one first flash portion. Additionally or alternatively, the second blow-molded container body further comprises at least one second flash portion.

It is to be understood that both the foregoing general description and the following detailed description are exemplary and are intended to provide further explanation of the disclosed subject matter claimed.

The accompanying drawings, which are incorporated in and constitute part of this specification, are included to illustrate and provide a further understanding of the disclosed subject matter. Together with the description, the drawings serve to explain the principles of the disclosed subject matter.

### BRIEF DESCRIPTION OF THE DRAWINGS

FIG. 1 is a schematic diagram illustrating a representative system according to an illustrative embodiment of the disclosed subject matter.
FIG. 2A is an end view of a representative first mold block assembly, including two mold blocks in a closed configuration to form a first mold chamber according to an illustrative embodiment of the disclosed subject matter.
FIG. 2B is a front view of one of the mold blocks of the representative first mold assembly of FIG. 2A.
FIG. 2C is a front view of another one of the mold blocks of the representative first mold assembly of FIG. 2A.
FIG. 3A is an end view of a representative second mold block assembly, including two mold blocks in a closed configuration to form a second mold chamber according to an illustrative embodiment of the disclosed subject matter.
FIG. 3B is a front view of one of the mold blocks of the representative second mold assembly of FIG. 3A.
FIG. 3C is a front view of another one of the mold blocks of the representative second mold assembly of FIG. 3A.
FIG. 3D is an exploded front view of the mold block of FIG. 3C with heat pins.
FIG. 4A is an end view of a representative contacting station according to an illustrative embodiment of the disclosed subject matter.
FIG. 4B is a partial perspective view of the representative contacting station of FIG. 4A.
FIGS. 5A-C collectively present a flow chart illustrating representative methods implemented according to an illustrative embodiment of the disclosed subject matter.
FIGS. 6A, 6B, and 6C are exploded views of representative intermediate stage pre-assembly multi-chamber containers according to illustrative embodiments of the disclosed subject matter.
FIGS. 7A, 7B, and 7C are diagrams illustrating representative multi-chamber containers made from the intermediate stage pre-assemblies of FIGS. 6A, 6B, and 6C, respectively, according to illustrative embodiments of the disclosed subject matter.

### DETAILED DESCRIPTION

Reference will now be made in detail to the various exemplary embodiments of the disclosed subject matter, exemplary embodiments of which are illustrated in the accompanying drawings. The structure and corresponding method of operation of the disclosed subject matter will be described in conjunction with the detailed description of the system.

The methods, assemblies, systems, and intermediate stage pre-assembly multi-chamber containers presented herein can be used to make multi-chamber containers. The disclosed subject matter is particularly suited to make multi-chamber plastic containers, for example, a dual-chamber plastic container.

In accordance with an aspect of the disclosed subject matter, a method to manufacture a multi-chamber container is disclosed. The method includes disposing a first parison within a first mold assembly having a first inner surface defining a first mold chamber. The first mold assembly includes at least one first insert disposed on the first inner surface within the first mold chamber. Any suitable technique can be used with the first parison to form a first container body within the first mold chamber, including and without limitation blow molding, injection molding, bi-injection molding, rotational molding, injection stretch blow molding, wherein at least one first portion of the first container body corresponding to the at least one first insert can have a first portion temperature greater than a remaining portion of the first container body. The at least one first portion of the first container body can be contacted to at least one second portion of a second container body to attach the first container body to the second container body.

In accordance with another aspect of the disclosed subject matter, a mold assembly is provided. The mold assembly includes a set of mold blocks having an open configuration and a closed configuration. The set of mold blocks has an inner surface forming a mold chamber when in the closed configuration. The mold assembly includes at least one insert disposed on the inner surface of at least one of the mold blocks to maintain at least one first portion of a first container body formed by blow molding a parison captured within the mold chamber at a first portion temperature greater than a remaining portion of the first container body to allow the first container body to be attached to a second container body by contacting the at least one first portion to at least one second portion of the second container body.

In accordance with another aspect of the disclosed subject matter, a system to make a container is provided. The system includes a first mold assembly with a first set of mold blocks having an open configuration and a closed configuration. The first set of mold blocks has a first inner surface forming a first mold chamber when in the closed configuration. At least one of the first mold blocks includes at least one first insert disposed on the first inner surface to maintain at least one first portion of a first container body formed by blow molding a first parison captured within the first mold chamber at a first portion temperature greater than a remaining portion of the first container body. At least one pressurized fluid source can be in fluid communication with the first mold chamber to blow mold the first parison into the first container body by introducing pressurized fluid to the first mold chamber. The system further includes a contacting station to contact the at least one first portion of the first container body to at least one second portion of a second container body.

In accordance with another aspect of the disclosed subject matter, an intermediate stage pre-assembly multi-chamber container to make a multi-chamber container is provided. The intermediate stage pre-assembly multi-chamber container includes a first blow-molded container body including a first base and a first sidewall, the first blow-molded container body having a first opening defined therein, the first sidewall having at least one first portion. A second blow-molded container body includes a second base and a second sidewall, the second blow-molded container body having a second opening defined therein, the second sidewall having at least one second portion. The at least one first portion has a first portion temperature greater than a remaining portion of the first blow-molded container body to allow the first blow-molded container body to be attached to the second blow-molded container body by contacting the at least one first portion to the at least one second portion of the second blow-molded container body.

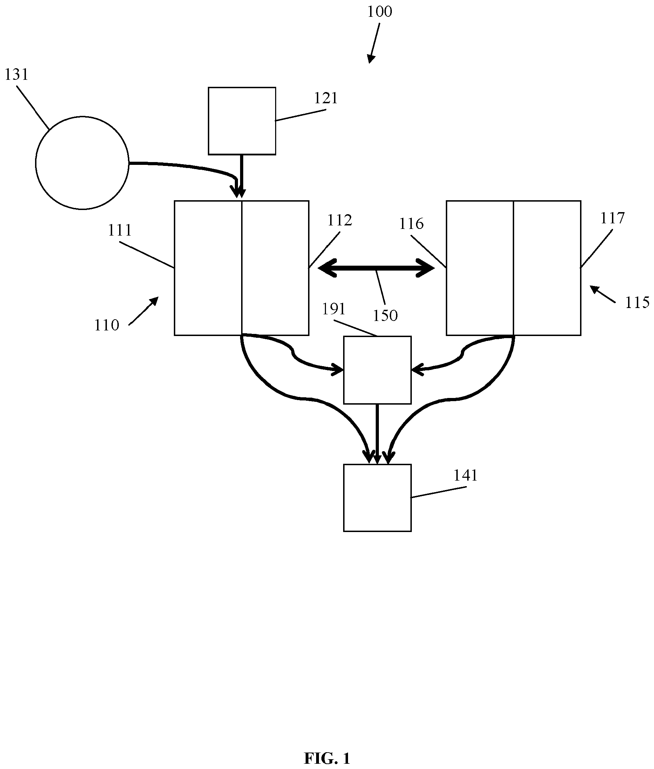

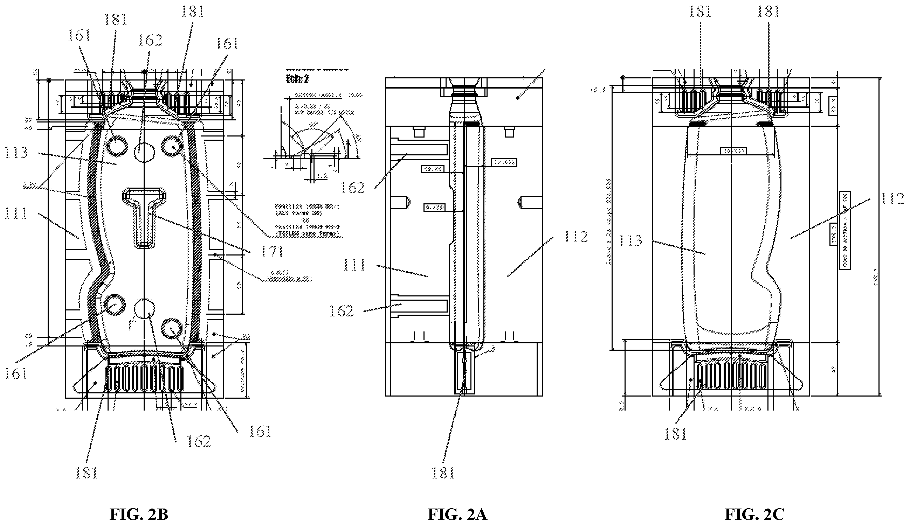

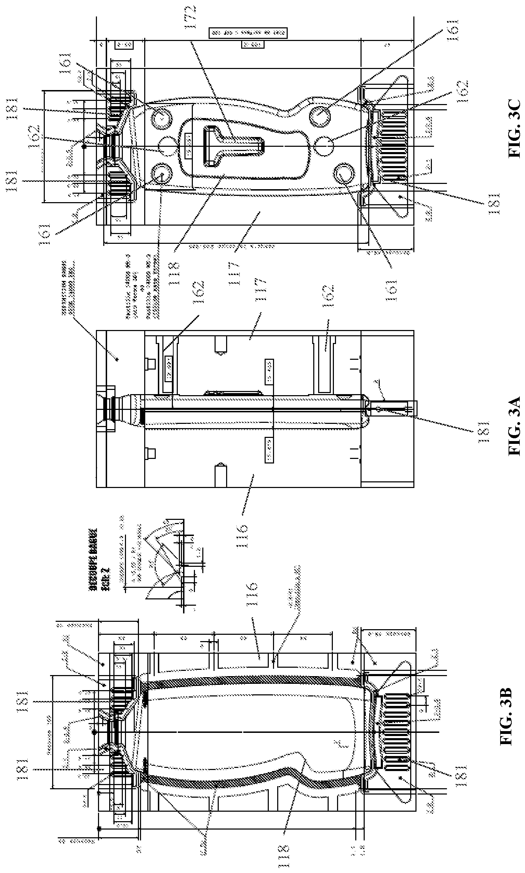

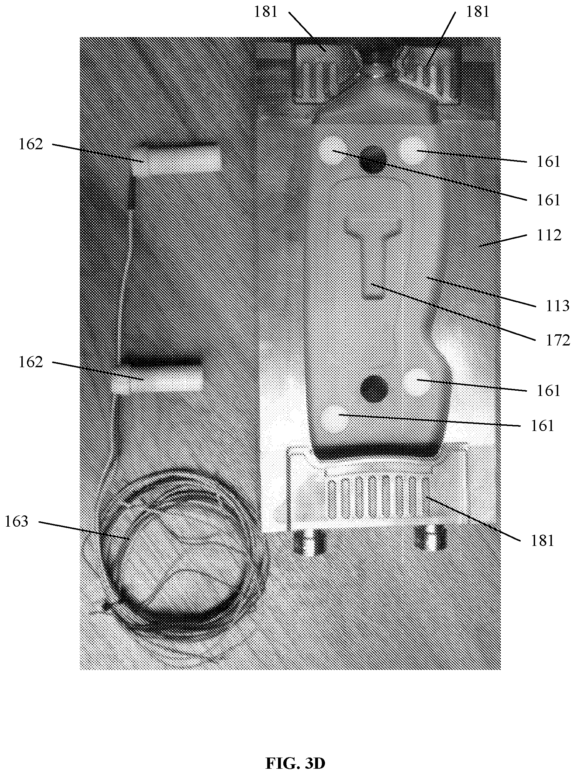

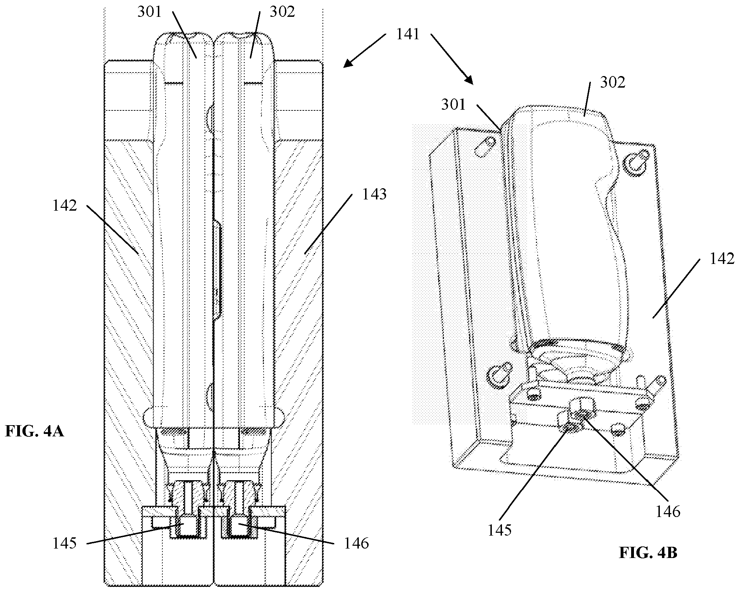

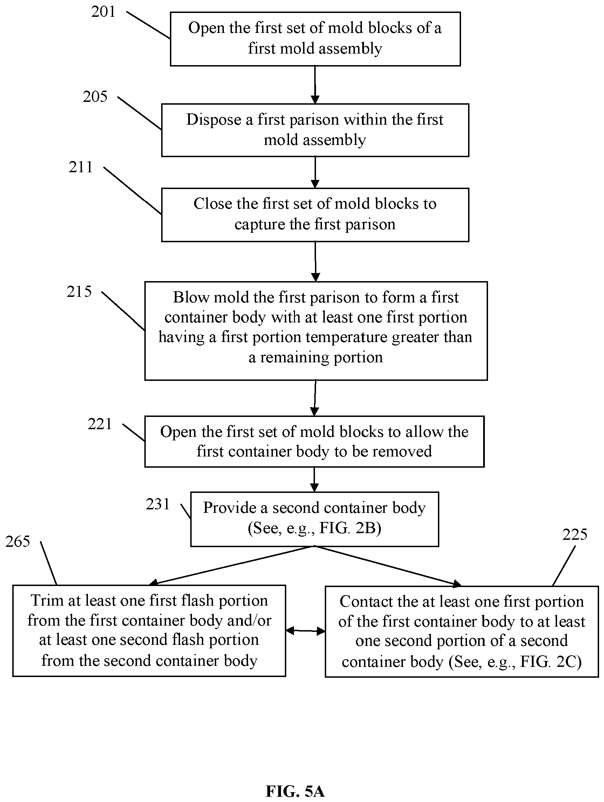

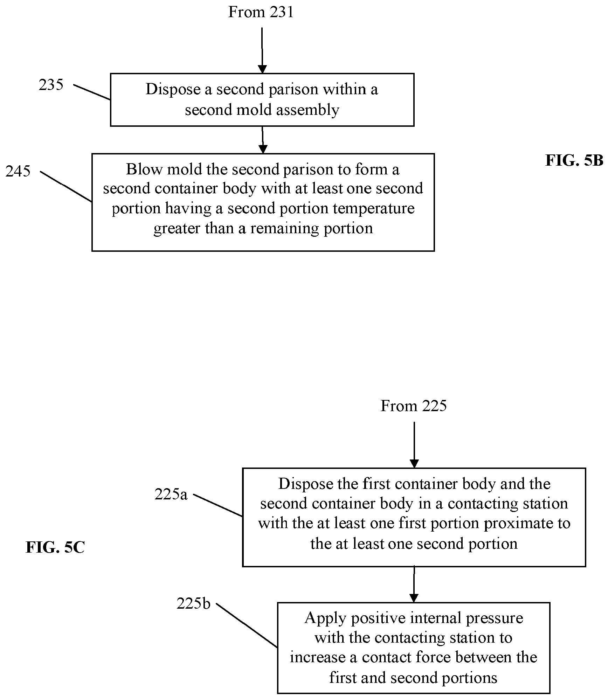

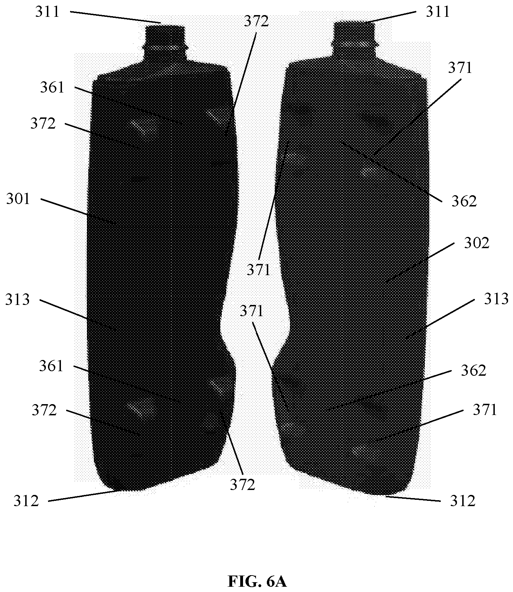

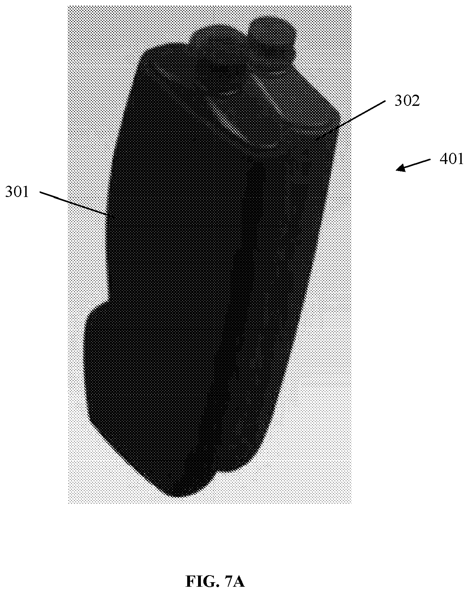

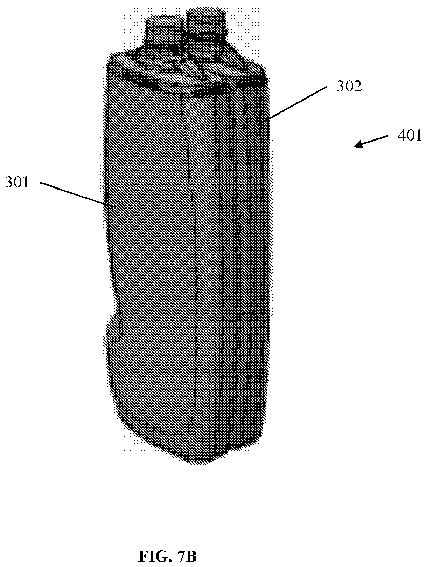

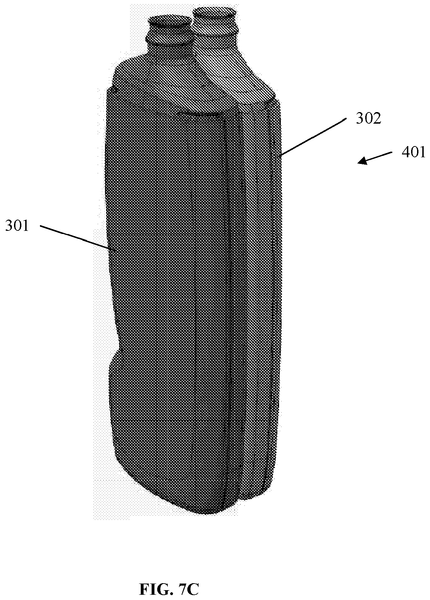

The accompanying figures, where like reference numerals refer to identical or functionally similar elements throughout the separate views, serve to further illustrate various embodiments and to explain various principles and advantages all in accordance with the disclosed subject matter. For purpose of explanation and illustration, and not limitation, an exemplary embodiment of a representative system to make a multi-chamber container in accordance with the disclosed subject matter are shown in FIG. 1. A representative first mold block assembly, including two mold blocks, in accordance with the disclosed subject matter is shown FIGS. 2A-C. A representative second mold block assembly, including two mold blocks and heat pins, in accordance with the disclosed subject matter is shown FIGS. 3A-D. A representative contacting station in accordance with the disclosed subject matter is shown FIGS. 4A-B. A flow chart illustrating representative methods implemented in accordance with the disclosed subject matter is shown collectively in FIGS. 5A-C. Exploded views of representative intermediate stage pre-assembly multi-chamber containers in accordance with the disclosed subject matter are shown in FIGS. 6A-C, and diagrams illustrating representative multi-chamber containers made from the intermediate stage pre-assemblies of FIGS. 6A-C, respectively, are shown in FIGS. 7A, 7B, and 7C. For purpose of illustration and not limitation, the methods, systems, mold assemblies, and intermediate stage pre-assembly multi-chamber containers are described in conjunction with each other.

The methods, systems, mold assemblies, and intermediate stage pre-assembly multi-chamber containers are suitable for use with a wide variety of containers. However, for purpose of understanding, reference can be made to a dual-chamber plastic container. For purpose of illustration and not limitation, the containers described herein can be formed from any material suitable for molding, including, but not limited to, plastics and other polymers. For example, the disclosed subject matter can be suited for making blow-molded containers.

In the exemplary embodiment shown in FIG. 1, a system to manufacture a container generally includes a first mold assembly 110 comprising a first set of mold blocks 111, 112. The mold blocks 111, 112 have an open configuration and a closed configuration. As depicted in FIGS. 2A-C and described below, the first set of mold blocks 111, 112 have a first inner surface 113 forming a first mold chamber when in the closed configuration. Additionally, the first mold assembly includes at least one first insert 161 disposed on the first inner surface 113 within the first mold chamber. Each first insert 161 maintains at least one first portion of a first container body 301 formed by blow molding a first parison captured within the first mold chamber at a first portion temperature greater than a remaining portion of the first container body, as discussed herein.

Referring again to FIG. 1, the first mold assembly 110 can be made of any suitable material. For purpose of illustration and not limitation, the first mold assembly can be made from a material configured to not adhere to the parison, which can be for example and as embodied herein, a metal, such as aluminum or steel. Additionally, the mold blocks 111, 112 can have any suitable size. For example and not limitation, the mold blocks 111, 112 can have a width, length, and depth suitably larger than the width, length, and depth of the first container body. For purpose of illustration and not limitation, the first mold assembly 110 can be movable along a path 150, as in a shuttle-type molding system. Examples of suitable shuttle-type molding systems include, but are not limited to, commonly assigned U.S. Patent No. 8,506,875, titled "Single-Sided Shuttle-Type Blow Molding Method," filed Oct. 6, 2010, U.S. Patent No. 7,833,006, title "Single-Sided Shuttle-Type Blow Molding Apparatus," filed July 26, 2006, U.S. Patent No. 6,730,257, titled "Shuttle-Type Blow Molding Method and Apparatus," filed Feb. 12, 2001, U.S. Patent No. 6,893,602, titled "Shuttle-Type Blow Molding Method and Apparatus," filed March 25, 2004, and U.S. Patent No. 6,471,907, titled "Shuttle-Type Blow Molding Method and Apparatus," filed December 14, 2000. Additionally or alternatively, the mold assembly 110 can be included in a wheel-type molding system. Examples of suitable wheel-type molding systems include commonly assigned U.S. Patent No. 5,645,870, titled "Blow Molding Apparatus Having a Cylindrical Hub," filed August 12, 1995, U.S. Patent No. 6,709,261, titled "Multi-Parison/Dual Cavity Wheel Blowmolds," filed March 23, 2001, U.S. Patent No. 6,884,383, titled "Blow-Mold Wheel Speed-Up Package," filed May 1, 2003, U.S. Patent No. 7,316,799, titled "Blow-Mold Wheel Speed-Up Package," filed April 11, 2005, and U.S. Patent No. 6,896, 507, titled "Mold Design with Improved Cooling," filed May 1, 2003.

FIGS. 2A-C show a representative first mold block assembly, including two mold blocks, in accordance with the disclosed subject matter. For purpose of illustration and not limitation, the first insert(s) 161 can be any suitable material. For example and not limitation, the first insert(s) 161 can include a first thermally insulating material. Additionally or alternatively, the first inserts 161 can include a first thermally conductive material. For example, the first insert(s) 161 can include but are not limited to tin, aluminum, plastic, polymer, or polytetrafluoroethylene (PTFE).

Additionally, the first mold assembly 110 further can include at least one first further insert 162 including a first heat pin configured to control a first further portion temperature. At least one first further portion of the first container body corresponding to the at least one first further insert 162 can have a first further portion temperature different than the first portion temperature and greater than the remaining portion of the first blow-molded container body. For example and not limitation, there can be a plurality of the first inserts 161 and at least one first further insert 162 including a first heat pin. Some first inserts 161 can include a thermally insulating material, and at least one of the first inserts 162 can include a heat pin. Additionally or alternatively, referring to FIGS. 3C-D, the second mold assembly 115 further can include at least one second further insert 162 including a second heat pin configured to control a second further portion temperature, similar to the first further portions 162. The first (or second) heat pins can be connected by wires 163 to any appropriate controller to control the temperature. For example and not limitation, appropriate controllers can include a power supply, a computer, an integrated circuit, a thermostat or any other suitable temperature controller. The first (or second) further inserts 162 can be any suitable material, including, but not limited to, the suitable materials described above regarding the first inserts 161.

As embodied herein, the first inserts 161 and first further inserts 162 can have any suitable size. For example and not limitation, the first inserts 161 and/or the first further inserts each can have a surface area less than about 5% of the first inner surface. For purpose of illustration and not limitation, the surface area can be configured as appropriate, for example based on the materials, thicknesses and number of inserts, to prevent or inhibit joined containers from separating during a drop test and to reduce or minimize the temperature of the insert and/or prevent or inhibit the parison from adhering to the inserts. Additionally, and as embodied herein, the first inserts 161 and first further inserts 162 can have any suitable shape, including, but not limited to, circular surface area, square surface area, or rectangular surface area. °Moreover, as embodied herein, there can be any suitable number and arrangement of first inserts 161 and/or first further inserts 162. For example and not limitation, there can be a single first insert 161. Alternatively, there can be a plurality of first inserts 161 arranged in any suitable arrangement. For purpose of illustration, as embodied herein, there can be four first inserts 161, and the first inserts 161 can generally be arranged at the top left, top right, bottom left, and bottom right of the inner surface 113. Additionally or alternatively, there can be a single first further insert 162, or there can be a plurality of first further inserts 162 arranged in any suitable arrangement. For purpose of illustration, as embodied herein, there can be two first further inserts 162, and the first further inserts 162 can generally be arranged at the top center and bottom center of the inner surface 113.

For purpose of illustration and not limitation, the first inner surface 113 that defines the first mold chamber can further include a surface feature forming region 171, 172 corresponding to at least one first surface feature of the first container body 301, as discussed herein. For example and not limitation, the first surface feature(s) can include at least one of a first protrusion, a first depression, a first ridge, or a first plurality of ribs. A protrusion 171 in the first inner surface 113 thus can form a corresponding depression in the first container body 301. Additionally or alternatively, a depression 172 in the first inner surface 113 can correspond to a protrusion in the first container body 301. The surface features can facilitate alignment of the first container body 301 with the second container body 302, as discussed herein. Likewise, the second container body 302 can be provided with a second surface feature to mate with the first surface feature of the first container body 301 for further alignment of the two container bodies 301, 302 together. For example and not limitation, referring to FIGS. 3A-D, a depression 172 in the second inner surface 118 can correspond to a protrusion in the second container body 302. Additionally or alternatively, a protrusion 171 in the second inner surface 118 thus can form a corresponding depression in the second container body 302. For example and not limitation, the second container body 302 can have at least one second surface feature to receive the at least one first surface feature of the first container body 301, as described herein.

Referring again to FIG. 1, at least one pressurized fluid source 131 can be in fluid communication with the first mold chamber to blow mold the first container body 301 by introducing pressurized fluid to the first mold chamber. The exemplary system herein further includes a contacting station 141 to contact the at least one first portion of the first container body 301 to at least one second portion of a second container body 302.

As embodied herein, the first set of mold blocks 116, 117 can have a cooling system to cool the remaining portion of the first container body 301 to a temperature less than the first portion temperature. For purpose of illustration and not limitation, an extruder 121 can extrude the first parison, at a temperature between about 190-210 °C, and as embodied herein the temperature can be about 200 °C. The first set of mold blocks 116, 117 can have a cooling temperature less than the temperature of the first parison. For example, the cooling temperature can be 8-12 °C. The parison from the extruder 121 can be captured in the mold blocks 116, 117 and blow molded to form a first container body, as discussed herein. The cooled mold blocks 116, 117 can cool the temperature of the remaining portion of the first container body that does not correspond to the first insert(s) 161 or first further insert(s) 162. For example, the first container body 301 can be cooled to a temperature of 40-60 °C.

As embodied herein, referring also to FIGS. 4A-B, the contacting station 141 can capture the first container body 301 and the second container body 302 with the at least one first portion of the first container body proximate to and aligned with the at least one second portion of the second container body. The contacting station 141 can apply positive internal pressure to increase a contact force between the at least one first portion and the at least one second portion. For purpose of illustration and not limitation, the contacting station 141 can have one or more inlets 145, 146. Pressurized fluid can be introduced though inlet(s) 145, 146 to apply positive internal pressure within the cavity of the first container body 301 and/or the cavity of the second container body 302, which can result in increased contact force between the first portion of the first container body 301 and the second portion of the second container body 302. The pressurized fluid can be supplied by the pressurized fluid source 131 or a separate pressurized fluid source. The positive internal pressure can be any suitable pressure applied for any suitable amount of time, which, for example and not limitation, can be between about 0.5 bar to 1.5 bar of pressure for between about 2 seconds to 5 seconds, and as embodied herein, can be 1 bar of pressure for 2 seconds.

Additionally, referring again to FIG. 1, a second mold assembly 115 can be provided. The second mold assembly 110 can be made of any suitable material, including, but not limited to, the materials discussed above regarding the first mold assembly 110. Additionally, the second set of mold blocks 116, 117 can have any suitable size. For example and not limitation, the mold blocks 116, 117 can have a width, length, and depth suitably larger than the width, length, and depth of the first container body. For example and not limitation, the second mold assembly 115 and the first mold assembly 110 can be movable along a path 150, for example as in a shuttle-type molding system or wheel-type molding system, as described above. As such, the second mold assembly 115 can also interact with the extruder 121 to capture a second parison and the pressurized fluid source 131 to blow mold the second parison into the second container body 302 as described above regarding the first mold assembly 110. Additionally or alternatively, a second extruder and/or second pressurized fluid source associated with the second mold assembly 115 can be provided. The second mold assembly 115 can include a second set of mold blocks 116, 117 having an open configuration and a closed configuration. The second set of mold blocks 116, 117 can have a second inner surface 118 forming a second mold chamber when in the closed configuration. At least one of the second mold blocks can also include at least one second insert 161 disposed on the second inner surface 11. The second insert(s) 161 can maintain at least one second portion of the second container body 302 formed by blow molding a second parison captured within the second mold chamber at a second portion temperature greater than a remaining portion of the second container body 302. Additionally, the second mold assembly can include at least one second further insert 162 including a second heat pin, similar to the first further insert 162 described above.

For purpose of illustration and not limitation, referring again to FIGS. 2A-C, the first mold assembly 110 can also include at least one first flash pocket 181 adjacent to the first mold chamber corresponding to at least one first flash portion of the first container body 301. Additionally or alternatively, referring also to FIGS. 3A-D, the second mold assembly 115 can further include at least one second flash pocket 181 adjacent to the second mold chamber corresponding to at least one second flash portion of the second container body 302. The system can also include comprising a trimming station 191 configured to trim the at least one first flash portion from the first container body 301 and the at least one second flash portion from the second container body 302. The trimming station 191 can trim the flash portion(s) using any suitable technique, including, but not limited to, a blade, a hot wire or a laser.

FIGS. 5A-C are flow charts illustrating representative methods to manufacture a container according to an illustrative embodiment of the disclosed subject matter. The exemplary methods of FIGS. 5A-C, for purpose of illustration and not limitation, are discussed with reference to the exemplary system of FIG. 1 and mold assemblies of FIGS. 2A-C and 3A-D. Referring to FIG. 5A, at 205, a first parison is disposed within a first mold assembly 110 having a first inner surface 113 defining a first mold chamber. The first mold assembly includes at least one first insert 161 disposed on the first inner surface 113 within the first mold chamber, as described above.

At 215, the first parison is blow molded to form a first container body 301 within the first mold chamber. At least one first portion of the first container body 301 corresponds to the at least one first insert 161. The first portions have a first portion temperature greater than a remaining portion of the first container body 301.

For purpose of illustration and not limitation, at 231, a second container body 302 can be provided, for example, as discussed further below regarding FIG. 2B. At 225, the first portion(s) of the first container body 301 can be contacted to at least one second portion of a second container body 302 to attach the first container body 301 to the second container body 302.

As embodied herein, the first mold assembly can include a first set of mold blocks 111, 112 having an open configuration and a closed configuration. The first set of mold blocks 111, 112 can form the mold chamber when in the closed configuration, as described above. As such, at 211, the first set of mold blocks 111, 112 can be opened before disposing the first parison therein (205). At 211, the first set of mold blocks 111, 112 can be closed with the first parison disposed therein (205) to capture the first parison. At 221, the first set of mold blocks 111, 112 can be opened after blow molding the first parison (215) to allow the first container body 301 to be removed from the first mold assembly 110.

Additionally, the first set of mold blocks 111, 112 can have a cooling system to cool the remaining portion of the first container body 301 to a temperature less than the first portion temperature, as described herein. For purpose of illustration and not limitation, the first portion temperature can remain greater than the remaining portion of the first container body for between about 0 seconds to 10 seconds. For example and not limitation, the first portion temperature can be at least a melting temperature of the parison, which can be about 130-140 °C. For purpose of illustration and not limitation, during molding, the parison can be about 200 °C, the mold can be about 20 °C, and the insert can be about 120-130 °C. During operation, the temperature of the parison can reduce. As such, when the container is removed, the temperature of container can be between about 40-60 °C, and the insert can be about 120 °C. After a period of time, for example about 20 seconds at room temperature, the temperature of the insert area can reduce such that the container does not adhere to other containers. Additionally or alternatively, each first insert can have a surface area less than about 5% of the first inner surface.

For purpose of illustration and not limitation, the at least one first insert 161 can include a thermally insulating material, as described herein. For example, the thermally insulating material can be PTFE, as described herein. Additionally, the first mold assembly 110 can include at least one first further insert 162 having a first heat pin configured to control a first further portion temperature as described herein, as described herein. For example, as embodied herein, at least one first further portion of the first container body 301 can correspond to the at least one first further insert 162 and can have the first further portion temperature different than the first portion temperature and greater than the remaining portion of the first blow-molded container body. For example and not limitation, a plurality of the first inserts 161 can be included, each first insert 161 comprising a thermally insulating material such as PTFE, and first mold assembly 110 further can includes at least one first further insert 162 having a first heat pin. Furthermore, and as embodied herein, the first inner surface 113 defining the first mold chamber can further include a surface feature forming region 171, 172, as described herein.

For purpose of illustration and not limitation, referring to FIG. 2C, at 225a, contacting the first portion(s) of the first container body 301 to the second portion(s) of a second container body 302 (225) can include disposing the first container body 301 and the second container 302 body in a contacting station 141, as described herein. The first portion(s) of the first container body 301 can be proximate to the second portion(s) of the second container body 302. At 225b, positive internal pressure can be applied within the contacting station 141, as described herein, to increase a contact force between the first portion(s) and the second portion(s).

Additionally, and as embodied herein, referring to FIG. 2B, at 235, a second parison can be disposed within the second mold assembly 115, which can have a second inner surface 118 defining a second mold chamber, as described herein. The second mold chamber can include at least one second insert 161 and/or at least one second further insert 162 disposed on the second inner surface 118, as described herein. At 245, the second parison can be blow molded to form a second container body 302, as described herein. The second portion(s) and second further portion(s) of the second container body 302 can correspond to the second insert(s) 161 and the second further insert(s) 162, respectively. The second portion(s) can have a second portion temperature greater than a remaining portion of the second container body 302 and/or the second further portions can have a second further portion temperature different than the second portion temperature and greater than a remaining portion of the second container body 302, as described herein. Referring again to FIG. 2A, at 225, the at least one second portion of the second container body 302 can be contacted to the at least one first portion of the first container body 301 to attach the second container body 302 to the first container body 301, as described herein.

For purpose of illustration and not limitation, the first mold assembly can include at least one first flash pocket 181 and/or the second mold assembly can include at least one second flash pocket 181, as described herein. As such, the first container body 301 and/or the second container body 302 can have at least one first flash portion and/or at least one second flash portion, respectively, as described herein. At 265, the first and/or second flash portion(s) can be trimmed from the first container body 301 and/or the second container body 302, respectively. For example and not limitation, the trimming (265) can occur before or after contacting the first container body 301 to the second container body 302 (255).

As embodied herein, the second portion temperature can remain greater than the remaining portion of the second container body 302 for about 30 seconds. Additionally, the second portion temperature can be at least the melting temperature of the parison, which can be about 130-140 °C.

For purpose of illustration and not limitation, the at least one first insert 161 and/or at least one first further insert 162 can have a surface area less than about 5% of the first inner surface, as described herein. Additionally or alternatively, the at least one second insert 161 and/or at least one second further insert 162 can have a surface area less than about 5% of the second inner surface, as described herein.

FIGS. 6A-C show exploded views of representative intermediate stage pre-assembly multi-chamber containers in accordance with the disclosed subject matter. For purpose of illustration and not limitation, an intermediate stage pre-assembly multi-chamber container includes a first blow molded container body 301 and a second blow molded container body 302. The first blow-molded container body 301 includes a first base 312 and a first sidewall 313 and has a first opening 311 defined therein. The first sidewall 313 has at least one first portion 361. The second blow-molded container body 302 includes a second base 312 and a second sidewall 313 and has a second opening 311 defined therein. The second sidewall has at least one second portion 362. The at least one first portion 361 has a first portion temperature greater than a remaining portion of the first blow-molded container body 301. The first portion temperature can allow the first blow-molded container body 301 to be attached to the second blow-molded container body 302 by contacting the at least one first portion 361 to the at least one second portion 362 of the second blow-molded container body 302, as described herein. For example and not limitation, the first portion(s) 361 can correspond to first insert(s) 161 in a first mold assembly 110, as described herein.

As embodied herein, the first container body 301 can include a plurality of the first portions 361. Additionally or alternatively, the first blow-molded container body 301 further can include a first further portion 363 having a first further portion temperature. For example and not limitation, the first further portion temperature can be different than the first portion temperature and greater than the remaining portion of the first blow-molded container body 301. For example and not limitation, the first further portion(s) 363 can correspond to first insert(s) 162 having heat pins in a first mold assembly 110, as described herein.

For purpose of illustration and not limitation, the first blow-molded container body 301 further can include at least one first surface feature 371, 372. The at least one first surface feature 371, 372 can facilitate alignment of the first blow-molded container body 301 with the second blow-molded container body 302, as described herein. For example and not limitation, the first surface feature(s) can include at least one of a first protrusion 372, a first depression 371, a first ridge, a first plurality of ribs, or a combination thereof Additionally, as embodied herein, the second container body 302 can have at least one second surface feature 371, 372 to receive the at least one first surface feature 371, 372 of the first container body.

For example and not limitation, the first portions 361 (and first further portions 363) of the first blow-molded container body 301 can contact the second portion 362 (and the second further portions 364) of the second blow-molded container body 302. Additionally, the second portions 362 can have a second portion temperature greater than a remaining portion of the second blow-molded container body 302. The second portion(s) 362 can correspond to second insert(s) 161 in a second mold assembly 115, as described herein. Additionally or alternatively, the second further portions 364 can have a second further portion temperature. The second further portion temperature can be different than the second portion temperature and greater than the remaining portion of the second blow-molded container body 302. For example and not limitation, the second further portion(s) 364 can correspond to second insert(s) 162 having heat pins in a second mold assembly 115, as described herein.

Additionally, the first blow-molded container body 301 further can include at least one first flash portion. Additionally or alternatively, the second blow-molded container body 302 further can include at least one second flash portion. The first and second flash portions can correspond to first and second flash pockets 181 in the first mold assembly 110 and the second mold assembly 115, respectively.

FIGS. 7A-C show exemplary embodiments of multi-chamber containers in accordance with the disclosed subject matter. Referring to FIG. 7A, the multi-chamber container 401 can correspond to the first container body 301 and second container body 302 depicted in FIG. 6A. For purpose of illustration and not limitation, the protrusions 372 of the first container body 301 can be aligned with the depressions 371 of the second container body 302. As such, the first portions 361 can be contacted to the second portions 362 while the first portion temperature and/or the second portion temperature is greater than the melting temperature of the parison, which as embodied herein can be about 130-140 °C, to attach the first container body 301 to the second container body 302.

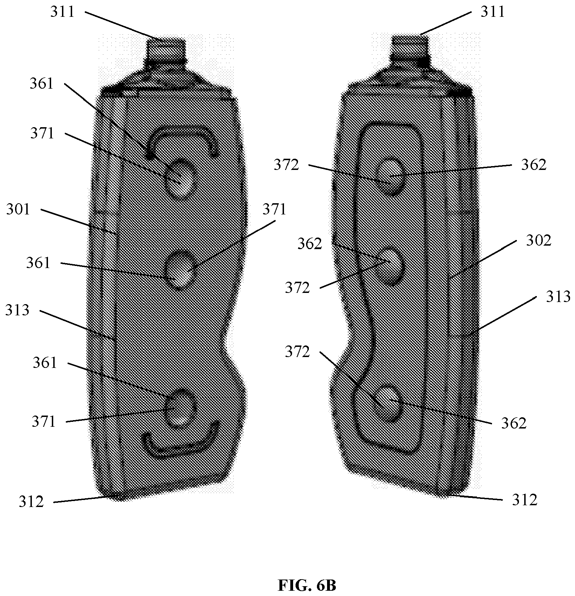

Referring to FIG. 7B, the multi-chamber container 401 can correspond to the first container body 301 and second container body 302 depicted in FIG. 6B. For purpose of illustration and not limitation, the depressions 371 of the first container body 301 can be aligned with the protrusions 372 of the second container body 302. As such, the first portions 361 can be contacted to the second portions 362 while the first portion temperature and/or the second portion temperature is greater than the a melting temperature of the parison, which as embodied herein can be about 130-140 °C, to attach the first container body 301 to the second container body 302. For example and not limitation, as depicted in FIG. 6B, the first portions 361 can coincide with the depressions 371 of the first container body 301, and the second portions 362 can coincide with the protrusions 372 of the second container body 302.

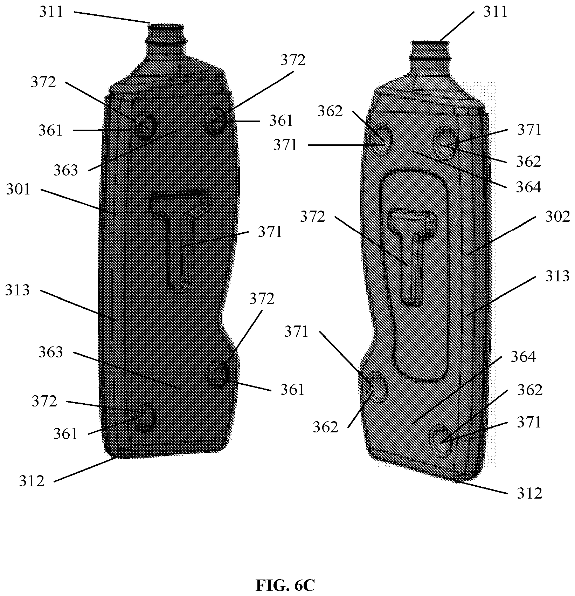

Referring to FIG. 7C, the multi-chamber container 401 can correspond to the first container body 301 and second container body 302 depicted in FIG. 6C. For purpose of illustration and not limitation, the depression 371 and protrusions 372 of the first container body 301 can be aligned with the corresponding protrusion 372 and depressions 371 of the second container body 302. As such, the first portions 361 and first further portions 363 can be contacted to the second portions 362 and second further portions 364 while at least one of the first portion temperature, the second portion temperature, the first further portion temperature, or the second further portion temperature is greater than the melting temperature of the parison, which as embodied herein can be about 130-140 °C, to attach the first container body 301 to the second container body 302. For example and not limitation, as depicted in FIG. 6C, the first portions 361 can coincide with the protrusions 372 of the first container body 301, and the second portions 362 can coincide with the depressions 371 of the second container body 302.

## Claims

1. A method to manufacture a multi-chamber container, comprising:
disposing (205) a first parison within a first mold assembly (110) having a first inner surface (113) defining a first mold chamber, the first mold assembly (110) including at least one first insert (161) disposed on the first inner surface (113) within the first mold chamber;
blow molding (215) the first parison to form a first container body (301) within the first mold chamber, wherein at least one first portion of the first container body (301) corresponding to the at least one first insert (161) has a first portion temperature greater than a remaining portion of the first container body (301); and
contacting (225) the at least one first portion of the first container body (301) to at least one second portion of a second container body (302) to attach the first container body (301) to the second container body (302).

2. The method of claim 1, wherein the first mold assembly comprises a first set of mold blocks (111, 112) having an open configuration and a closed configuration, the first set of mold blocks forming the mold chamber when in the closed configuration, the method further comprising:
opening (201) the first set of mold blocks (111, 112) before disposing the first parison therein;
closing (211) the first set of mold blocks (111, 112) with the first parison disposed therein to capture the first parison; and
opening (221) the first set of mold blocks (111, 112) after blow molding the first parison to allow the first container body (301) to be removed from the first mold assembly (110).

3. The method of claim 1, wherein contacting the at least one first portion of the first container body to at least one second portion of a second container body comprises:
disposing (225a) the first container body (301) and the second container body (302) in a contacting station (141), wherein the at least one first portion of the first container body (301) is proximate to the at least one second portion of the second container body (302); and
applying positive internal pressure within the contacting station to increase a contact force between the at least one first portion and the at least one second portion.

4. The method of claim 1, further comprising:
disposing (235) a second parison within a second mold assembly having a second inner surface defining a second mold chamber, the second mold chamber including at least one second insert disposed on the second inner surface;
blow molding (245) the second parison to form the second container body (302), wherein the at least one second portion of the second container body (302) corresponding to the at least one second insert has a second portion temperature greater than a remaining portion of the second container body (302); and
contacting the at least one second portion of the second container body (302) to the at least one first portion of the first container body (301) to attach the second container body to the first container body.

5. A mold assembly, comprising:
a set of mold blocks (111, 112) having an open configuration and a closed configuration, the set of mold blocks (111, 112) having an inner surface (113) forming a mold chamber when in the closed configuration, **characterized in that** at least one of the mold blocks includes at least one insert disposed on the inner surface;
wherein the at least one insert (161) is configured to maintain at least one first portion of a first container body (301) formed by blow molding a parison captured within the mold chamber at a first portion temperature greater than a remaining portion of the first container body to allow the first container body (301) to be attached to a second container body (302) by contacting the at least one first portion to at least one second portion of the second container body (302).

6. The mold assembly of claim 5, wherein the set of mold blocks (111, 112) has a cooling system to cool the remaining portion of the first container body to a temperature less than the first portion temperature.

7. The mold assembly of claim 5, wherein the at least one insert (161) has a surface area less than about 5% of the inner surface.

8. The mold assembly of claim 5, wherein the at least one insert (161) comprises a thermally insulating material.

9. The mold assembly of claim 8, wherein the thermally insulating material comprises polytetrafluoroethylene (PTFE).

10. The mold assembly of claim 5, further comprising at least one further insert (162) having a heat pin, wherein the at least one further insert (162) is configured to maintain at least one first further portion of the first container body (301) at a first further portion temperature different than the first portion temperature and greater than the remaining portion of the first blow-molded container body (301), and wherein the heat pin is configured to control the first further portion temperature.

11. The mold assembly of claim 5, wherein the inner surface further comprises a surface feature (172) forming region corresponding to at least one surface feature (172) of the container body, the at least one surface feature (172) configured to facilitate alignment of the first container body (301) with the second container body (302);
wherein the at least one surface feature (172) comprises at least one of a protrusion, a depression, a ridge, or a plurality of ribs.

12. A system to make a container, comprising:
a mold assembly (110) in accordance with any of claims 5 to 11;
at least one pressurized fluid source (131) in fluid communication with the mold chamber to blow mold the parison into the first container body (301) by introducing pressurized fluid to the mold chamber; and
a contacting station (141) configured to contact the at least one first portion of the first container body (301) to the at least one second portion of the second container body (302).

13. The system of claim 12, wherein the contacting station (141) is configured to capture the first container body (301) and the second container body to align the at least one first portion of the first container body (301) proximate to the at least one second portion of the second container body (302), and further wherein the contacting station (141) is configured to apply positive internal pressure to increase a contact force between the at least one first portion and the at least one second portion.

14. The system of claim 12, further comprising a second mold assembly (115) comprising a second set of mold blocks (116, 117) having an open configuration and a closed configuration, the second set of mold blocks (116, 117) having a second inner surface forming a second mold chamber when in the closed configuration, at least one of the second mold blocks including at least one second insert disposed on the second inner surface, the at least one second insert configured to maintain at least one second portion of a second container body (302) formed by blow molding a second parison captured within the second mold chamber at a second portion temperature greater than a remaining portion of the second container body (302),
wherein the at least one pressurized fluid source is in fluid communication with the second mold chamber to blow mold the second parison into the second container body (302) by introducing pressurized fluid to the second mold chamber.

15. The system of claim 14, wherein the first mold assembly (110) further comprises at least one first flash pocket adjacent to the first mold chamber corresponding to at least one first flash portion of the first container body, and further wherein the second mold assembly further comprises at least one second flash pocket adjacent to the second mold chamber corresponding to at least one second flash portion of the second container body, the system further comprising a trimming station (191) configured to trim the at least one first flash portion from the first container body (301) and the at least one second flash portion from the second container body (302).

## Patentansprüche

1. Verfahren zur Herstellung eines Mehrkammerbehälters, umfassend:
Anbringen (205) eines ersten Vorformlings innerhalb einer Formanordnung (110) mit einer ersten Innenfläche (113), die eine erste Formkammer definiert, wobei die erste Formanordnung (110) mindestens einen ersten Einsatz (161) einschließt, der auf der ersten Innenfläche (113) innerhalb der ersten Formkammer angebracht ist;
Formblasen (215) der ersten Vorformlings, um einen ersten Behälterkörper (301) innerhalb der ersten Formkammer zu bilden, wobei mindestens ein erster Abschnitt des ersten Behälterkörpers (301), der dem mindestens einen ersten Einsatz (161) entspricht, eine erste Abschnittstemperatur aufweist, die größer als ein verbleibender Abschnitt des ersten Behälterkörpers (301) ist; und
In-Kontakt-Bringen (225) des mindestens einen ersten Abschnitts des ersten Behälterkörpers (301) mit mindestens einem zweiten Abschnitt eines zweiten Behälterkörpers (302), um den ersten Behälterkörper (301) an den zweiten Behälterkörper (302) zu befestigen.

2. Verfahren nach Anspruch 1, wobei die erste Formanordnung einen ersten Satz von Formblöcken (111, 112) umfasst, der eine offene Konfiguration und eine geschlossene Konfiguration aufweist, wobei der erste Satz von Formblöcken die Formkammer bildet, wenn sie sich in der geschlossenen Konfiguration befindet, wobei das Verfahren weiter Folgendes umfasst:
Öffnen (201) des ersten Satzes von Formblöcken (111, 112) vor dem Anbringen des ersten Vorformlings darin;
Schließen (211) des ersten Satzes von Formblöcken (111, 112), wobei der erste Vorformling darin angebracht ist, um den ersten Vorformling zu erfassen; und
Öffnen (221) des ersten Satzes von Formblöcken (111, 112) nach dem Formblasen des ersten Vorformlings, um zu ermöglichen, dass der erste Behälterkörper (301) von der ersten Formanordnung (110) entfernt wird.

3. Verfahren nach Anspruch 1, wobei das In-Kontakt-Bringen des mindestens einen ersten Abschnitts des ersten Behälterkörpers mit mindestens einem zweiten Abschnitt des zweiten Behälterkörpers Folgendes umfasst:
Anbringen (225a) des ersten Behälterkörpers (301) und des zweiten Behälterkörpers (302) in einer Kontaktstation (141), wobei der mindestens eine erste Abschnitt des ersten Behälterkörpers (301) benachbart dem mindestens einen zweiten Abschnitt des zweiten Behälterkörpers (302) ist; und
Anwenden von positivem inneren Druck innerhalb der Kontaktstation, um die Kontaktkraft zwischen dem mindestens einen ersten Abschnitt und dem mindestens einen zweiten Abschnitt zu erhöhen.

4. System nach Anspruch 1, weiter umfassend:
Anbringen (235) eines zweiten Vorformlings innerhalb einer zweiten Formanordnung mit einer zweiten Innenfläche, die eine zweite Formkammer definiert, wobei die zweite Formkammer mindestens einen zweiten Einsatz einschließt, der auf der zweiten Innenfläche angebracht ist;
Formblasen (245) des zweiten Vorformlings, um den zweiten Behälterkörper (302) zu bilden, wobei der mindestens eine zweite Abschnitt des zweiten Behälterkörpers (302), der dem mindestens einen zweiten Einsatz entspricht, eine zweite Abschnittstemperatur aufweist, die größer als ein verbleibender Abschnitt des zweiten Behälterkörpers (302) ist; und
In-Kontakt-Bringen des mindestens einen zweiten Abschnitts des zweiten Behälterkörpers (302) mit dem mindestens einen ersten Abschnitt des ersten Behälterkörpers (301), um den zweiten Behälterkörper (302) an den ersten Behälterkörper zu befestigen.

5. Formanordnung, umfassend:
einen Satz von Formblöcken (111, 112), der eine offene Konfiguration und eine geschlossene Konfiguration aufweist, wobei der Satz von Formblöcken (111, 112) eine Innenfläche (113) aufweist, die eine Formkammer bildet, wenn er sich in der geschlossenen Konfiguration befindet, **dadurch gekennzeichnet, dass** mindestens einer der Formblöcke mindestens einen Einsatz einschließt, der auf der Innenfläche angebracht ist;
wobei der mindestens eine Einsatz (161) konfiguriert ist, um mindestens einen ersten Abschnitt eines ersten Behälterkörpers (301), der durch Blasformen eines Vorformlings gebildet ist, der innerhalb der Formkammer erfasst ist, bei einer ersten Abschnittstemperatur beizubehalten, die größer als ein verbleibender Abschnitt des ersten Behälterkörpers ist, um zu ermöglichen, dass der erste Behälterkörper (301) an den zweiten Behälterkörper (302) durch In-Kontakt-Bringen des mindestens einen ersten Abschnitts mit mindestens einem zweiten Abschnitt des zweiten Behälterkörpers (302) befestigt ist.

6. Formanordnung nach Anspruch 5, wobei der Satz von Formblöcken (111, 112) ein Kühlsystem aufweist, um den verbleibenden Abschnitt des ersten Behälterkörpers auf eine Temperatur von weniger als der Temperatur des ersten Abschnitts abzukühlen.

7. Formanordnung nach Anspruch 5, wobei der mindestens eine Einsatz (161) einen Oberflächenbereich von weniger als ungefähr 5 % der Innenfläche aufweist.

8. Formanordnung nach Anspruch 5, wobei der mindestens eine Einsatz (161) ein thermisch isolierendes Material umfasst.

9. Formanordnung nach Anspruch 8, wobei das thermisch isolierende Material Polytetrafluoroethylen (PTFE) umfasst.

10. Formanordnung nach Anspruch 5, weiter umfassend mindestens einen weiteren Einsatz (162), umfassend einen Heizstift, wobei der mindestens eine weitere Einsatz (162) konfiguriert ist, um mindestens einen ersten weiteren Abschnitt des ersten Behälterkörpers (301) bei einer ersten weiteren Abschnittstemperatur zu halten, die verschieden von der ersten Abschnittstemperatur die größer als der verbleibende Abschnitt des ersten blasgeformten Behälterkörpers (301) ist, und wobei der Heizstift konfiguriert ist, um die erste weitere Abschnittstemperatur zu steuern.

11. Formanordnung nach Anspruch 5, wobei die Innenfläche weiter ein Oberflächenmerkmal (172) umfasst, das eine Region bildet, die mindestens einem Oberflächenmerkmal (172) des Behälterkörpers entspricht, wobei das mindestens eine Oberflächemerkmal (172) konfiguriert ist, um eine Ausfluchtung des ersten Behälterkörpers (301) mit dem zweiten Behälterkörper (302) zu erleichtern;
wobei das mindestens eine Oberflächenmerkmal (172) mindestens eines von einem Vorsprung, einer Einsenkung, einem Grat oder einer Vielzahl von Rippen umfasst.

12. System zur Herstellung eines Behälters, umfassend:
eine Formanordnung (110) gemäß einem der Ansprüche 5 bis 11;
mindestens eine unter Druck gesetzte Fluidquelle (131) in fluidischer Kommunikation mit der Formkammer, um den Vorformling in den ersten Behälterkörper (301) durch Einführen von unter Druck gesetztem Fluid in die Formkammer blaszuformen; und
eine Kontaktstation (141), die konfiguriert ist, um den mindestens einen ersten Abschnitt des ersten Behälterkörpers (301) mit dem mindestens einen zweiten Abschnitt des zweiten Behälterkörpers (302) in Kontakt zu bringen.

13. System nach Anspruch 12, wobei die Kontaktstation (141) konfiguriert ist, um den ersten Behälterkörper (301) und den zweiten Behälterkörper zu erfassen, um den mindestens einen ersten Abschnitt des ersten Behälterkörpers (301) benachbart dem mindestens einen zweiten Abschnitt des zweiten Behälterkörpers (302) auszufluchten, und weiter wobei die Kontaktstation (141) konfiguriert ist, um positiven inneren Druck anzuwenden, um eine Kontaktkraft zwischen dem mindestens einen ersten Abschnitt und dem mindestens einen zweiten Abschnitt zu erhöhen.

14. System nach Anspruch 12, weiter umfassend eine zweite Formanordnung (115), die einen ersten Satz von Formblöcken (116, 117) umfasst, der eine offene Konfiguration und eine geschlossene Konfiguration aufweist, wobei der zweite Satz von Formblöcken (116, 117) eine zweite Innenfläche aufweist, die eine zweite Formkammer bildet, wenn er sich in der geschlossenen Konfiguration befindet, wobei mindestens einer der zweiten Formblöcke mindestens einen zweiten Einsatz einschließt, der auf der zweiten Innenfläche angebracht ist; wobei der mindestens eine zweite Einsatz konfiguriert ist, um mindestens einen zweiten Abschnitt eines zweiten Behälterkörpers (302), der durch Formblasen eines zweiten Vorformlings gebildet ist, der innerhalb der zweiten Formkammer erfasst ist, bei einer zweiten Abschnittstemperatur zu halten, der größer als ein verbleibender Abschnitt des zweiten Behälterkörpers (302) ist,
wobei die mindestens eine unter Druck gesetzte Fluidquelle in fluidischer Kommunikation mit der zweiten Formkammer ist, um den zweiten Vorformling an den zweiten Behälterkörper (302) durch Einführen von unter Druck gesetztem Fluid in die zweite Formkammer blaszuformen.

15. System nach Anspruch 14, wobei die erste Formanordnung (110) weiter mindestens einen ersten Blitzbeutel benachbart der ersten Formkammer umfasst, die mindestens einem einem Blitzabschnitt des ersten Behälterkörpers entspricht, und weiter wobei die zweite Formanordnung weiter mindestens einen zweiten Blitzbeutel benachbart der zweiten Formkammer umfasst, die mindestens einem zweiten Blitzabschnitt des zweiten Behälterkörpers entspricht, wobei das System weiter eine Schneidedestation (191) umfasst, die konfiguriert ist, um den mindestens einen ersten Bitzabschnitt vom ersten Behälterkörper (301) mit dem mindestens einen zweiten Blitzabschnitt vom zweiten Behälterkörper (302) zu kürzen.

## Revendications

1. Procédé de fabrication d'un récipient à chambres multiples, comprenant :
la disposition (205) d'une première paraison à l'intérieur d'un premier ensemble de moule (110) ayant une première surface interne (113) définissant une première chambre de moule, le premier ensemble de moule (110) incluant au moins un premier insert (161) disposé sur la première surface interne (113) à l'intérieur de la première chambre de moule ;
le moulage par soufflage (215) de la première paraison pour former un premier corps de récipient (301) à l'intérieur de la première chambre de moule, dans lequel au moins une première partie du premier corps de récipient (301) correspondant à l'au moins un premier insert (161) présente une température de première partie supérieure à une partie restante du premier corps de récipient (301) ; et
la mise en contact (225) de l'au moins une première partie du premier corps de récipient (301) avec l'au moins une seconde partie d'un second corps de récipient (302) pour fixer le premier corps de récipient (301) au second corps de récipient (302).

2. Procédé selon la revendication 1, dans lequel le premier ensemble de moule comprend un premier jeu de blocs de moule (111, 112) ayant une configuration ouverte et une configuration fermée, le premier jeu de blocs de moule formant la chambre de moule lorsqu'ils sont dans la configuration fermée, le procédé comprenant en outre :
l'ouverture (201) du premier jeu de blocs de moule (11, 112) avant de disposer la première paraison à l'intérieur ;
la fermeture (211) du premier jeu de blocs de moule (111, 112) avec la première paraison disposée à l'intérieur pour capturer la première paraison ; et
l'ouverture (221) du premier jeu de blocs de moule (111, 112) après moulage par soufflage de la première paraison pour permettre au premier corps de récipient (301) d'être retiré du premier ensemble de moule (110).

3. Procédé selon la revendication 1, dans lequel la mise en contact de l'au moins une partie du premier corps de récipient avec au moins une seconde partie d'un second corps de récipient comprend :
la disposition (225a) du premier corps de récipient (301) et du second corps de récipient (302) dans une station de mise en contact (141), dans lequel l'au moins une première partie du premier corps de récipient (301) est à proximité de l'au moins une seconde partie du second corps de récipient (302) ; et
l'application d'une pression interne positive à l'intérieur de la station de mise en contact pour augmenter une force de contact entre l'au moins une première partie et l'au moins une seconde partie.

4. Procédé selon la revendication 1, comprenant en outre :
la disposition (235) d'une seconde paraison à l'intérieur d'un second ensemble de moule ayant une seconde surface interne définissant une seconde chambre de moule, la seconde chambre de moule incluant au moins un second insert disposé sur la seconde surface interne ;
le moulage par soufflage (245) de la seconde paraison pour former le second corps de récipient (302), dans lequel l'au moins une seconde partie du second corps de récipient (302) correspondant à l'au moins un second insert présente une température de seconde partie supérieure à une partie restante du second corps de récipient (302) ; et
la mise en contact de l'au moins une seconde partie du second corps de récipient (302) avec l'au moins une partie du premier corps de récipient (301) pour fixer le second corps de récipient au premier corps de récipient.

5. Ensemble de moule, comprenant :
un jeu de blocs de moule (111, 112) ayant une configuration ouverte et une configuration fermée, le jeu de blocs de moule (111, 112) ayant une surface interne (113) formant une chambre de moule lorsqu'ils sont dans la configuration fermée, **caractérisé en ce qu'**au moins l'un des blocs de moule inclut au moins un insert disposé sur la surface interne ;
dans lequel l'au moins un insert (161) est conçu pour maintenir au moins une première partie d'un premier corps de récipient (301) formée par moulage par soufflage d'une paraison capturée à l'intérieur de la chambre de moule à une température de première partie supérieure à une partie restante du premier corps de récipient pour permettre au premier corps de récipient (301) d'être fixé à un second corps de récipient (302) en mettant en contact l'au moins une première partie avec au moins une seconde partie du second corps de récipient (302).

6. Ensemble de moule selon la revendication 5, dans lequel le jeu de blocs de moule (111, 112) a un système de refroidissement pour refroidir la partie restante du premier corps de récipient à une température inférieure à la température de première partie.

7. Ensemble de moule selon la revendication 5, dans lequel l'au moins un insert (161) a une étendue de surface inférieure à environ 5 % de la surface interne.

8. Ensemble de moule selon la revendication 5, dans lequel l'au moins un insert (161) comprend un matériau thermo-isolant.

9. Ensemble de moule selon la revendication 8, dans lequel le matériau thermo-isolant comprend du polytétrafluoroéthylène (PTFE).

10. Ensemble de moule selon la revendication 5, comprenant en outre au moins un autre insert (162) ayant une broche chauffante, dans lequel l'au moins un autre insert (162) est conçu pour maintenir au moins une première autre partie du premier corps de récipient (301) à une température de première autre partie différente de la température de première partie et supérieure à la partie restante du premier corps de récipient (301) moulé par soufflage, et dans lequel la broche chauffante est conçue pour commander la température de la première autre partie.

11. Ensemble de moule selon la revendication 5, dans lequel la surface interne comprend en outre une région formant caractéristique de surface (172) correspondant à au moins une caractéristique de surface (172) du corps de récipient, l'au moins une caractéristique de surface (172) étant conçue pour faciliter l'alignement du premier corps de récipient (301) avec le second corps de récipient (302) ;
dans lequel l'au moins une caractéristique de surface (172) comprend au moins l'une d'une saillie, d'un creux, d'une arête ou d'une pluralité de nervures.

12. Système pour fabriquer un récipient, comprenant :
un ensemble de moule (110) selon l'une quelconque des revendications 5 à 11 ;
au moins une source de fluide sous pression (131) en communication fluidique avec la chambre de moule pour mouler par soufflage la paraison dans le premier corps de récipient (301) en introduisant du fluide sous pression dans la chambre de moule ; et
une station de mise en contact (141) conçue pour mettre en contact l'au moins une première partie du premier corps de récipient (301) avec l'au moins une seconde partie du second corps de récipient (302).

13. Système selon la revendication 12, dans lequel la station de mise en contact (141) est conçue pour capturer le premier corps de récipient (301) et le second corps de récipient pour aligner l'au moins une première partie du premier corps de récipient (301) à proximité de l'au moins une seconde partie du second corps de récipient (302), et dans lequel en outre la station de mise en contact (141) est conçue pour appliquer une pression interne positive pour augmenter une force de contact entre l'au moins une première partie et l'au moins une seconde partie.

14. Système selon la revendication 12, comprenant en outre un second ensemble de moule (115) comprenant un second jeu de blocs de moule (116, 117) ayant une configuration ouverte et une configuration fermée, le second jeu de blocs de moule (116, 117) présentant une seconde surface interne formant une seconde chambre de moule lorsqu'il est dans la configuration fermée, au moins l'un des seconds blocs de moule incluant au moins un second insert disposé sur la seconde surface interne, l'au moins un second insert étant conçu pour maintenir au moins une seconde partie d'un second corps de récipient (302) formé par moulage par soufflage d'une seconde paraison capturée à l'intérieur de la seconde chambre de moule à une température de seconde partie supérieure à une partie restante du second corps de récipient (302),
dans lequel l'au moins une source de fluide sous pression est en communication fluidique avec la seconde chambre de moule pour mouler par soufflage la seconde paraison dans le second corps de récipient (302) en introduisant du fluide sous pression dans la seconde chambre de moule.

15. Système selon la revendication 14, dans lequel le premier ensemble de moule (110) comprend en outre au moins une première réserve d'ébavurage adjacente à la première chambre de moule correspondant à au moins une première partie de bavure du premier corps de récipient, et dans lequel en outre le second ensemble de moule comprend en outre au moins une seconde réserve d'ébavurage adjacente à la seconde chambre de moule correspondant à au moins une seconde partie de bavure du second corps de récipient, le système comprenant en outre une station d'ébavurage (191) conçue pour ébavurer l'au moins une première partie de bavure du premier corps de récipient (301) et l'au moins une seconde partie de bavure du second corps de récipient (302) .
